# FASCICULE DE BREVET EUROPEEN

(11) **EP 2 011 619 B1**
(45) Date de publication et mention de la délivrance du brevet: **27.06.2012**
(21) Numéro de dépôt: 08356104.3
(22) Date de dépôt: 04.07.2008
(51) Int. Cl.: B29C 45/14, F16C 11/06, F16C 33/08

(54) **Ensemble de joint mécanique, tel qu'un ensemble rotulant, ainsi que procédé de fabrication d'un tel ensemble rotulant**
Mechanische Gelenkeinheit, wie beispielsweise eine verdrehbare Einheit, sowie Herstellungsverfahren einer solchen verdrehbaren Einheit
Mechanical joint assembly, such as a rotating assembly, and method of manufacturing such a rotating assembly

(30) Priorité: 05.07.2007 FR 0704861
(43) Date de publication de la demande: 07.01.2009
(73) Titulaire: SKF Aerospace France, 26240 Saint-Vallier-sur-Rhone (FR)
(72) Inventeur: Reverchon, Patrick, Jean-Marie, Firmin, 39570 Crancot (FR)
(74) Mandataire: Grand, Guillaume

(56) Documents cités:
- WO-A-2007/009423
- DE-A1- 10 236 829
- DE-A1-102004 041 084
- FR-A- 1 547 030
- FR-A- 2 617 923
- US-A- 4 509 870

## Description

La présente invention concerne un ensemble de joint mécanique. Elle concerne également un procédé de fabrication d'un ensemble rotulant.

L'invention s'intéresse plus particulièrement aux ensembles de joint selon le préambule de la revendication 1, c'est-à-dire aux ensembles de joint comportant, comme composant externe, un corps en un matériau composite à matrice en matière plastique et, comme composant interne, un organe d'articulation tel qu'une noix de rotule, avec interposition d'un insert rigide métallique entre ce corps externe et cet organe interne. Autrement présenté, ce genre d'ensemble de joint correspond typiquement à une rotule ou à un roulement, dont la bague dite « extérieure » est recouverte extérieurement par un matériau composite, de sorte que cette bague « extérieure » correspond au final à l'insert métallique évoqué ci-dessus et est liée fixement au matériau composite, ce dernier formant le corps externe mentionné ci-dessus. En pratique, ce corps externe en matériau composite est conformé en des structures très diverses, telles qu'une collerette, une bride analogue à une ferrure ou une extrémité d'un tube de bielle ou autre.

L'invention concerne ainsi préférentiellement, mais non exclusivement, le domaine aéronautique dans lequel l'utilisation de matériaux composites est privilégiée eu égard à leur faible poids.

Ce type d'ensemble de joint ne doit pas être confondu avec les ensembles proposés par US-A-6 139 788 et son perfectionnement WO-A-2007/009423, dans lesquels une boule interne est montée rotulante dans une coquille en matériau composite, rapportée par emboîtement autour de la boule puis recouverte d'un corps externe en métal coulé ou en plastique injecté. Cette structure à coquille intermédiaire composite permet d'obtenir un effet de glissement remarquable entre la boule et la coquille, mais ne supporte que des sollicitations mécaniques d'intensité très limitée, sauf à courir le risque de « déboîter » la boule de sa coquille.

De même, le type d'ensemble de joint auquel s'intéresse l'invention ne correspond pas aux structures de joint intégrant une bague synthétique de remplissage, qui recouvre un insert antifriction. Un exemple de ce genre de bague synthétique est donné dans FR-A-1 547 030. En effet, en service, ces structures ne transmettent pas d'effort à leur bague synthétique, qui est d'ailleurs prévue molle et élastique, notamment à des fins d'ajustement.

Pour ce qui concerne le type d'ensemble de joint concerné par l'invention, on constate toutefois une limitation technique importante au niveau de l'interface entre l'insert et le corps en matériau composite. En effet, il est courant que l'insert présente une géométrie extérieure de type cylindrique à base circulaire, centrée sur l'axe de symétrie de révolution de sa surface intérieure, typiquement sphérique dans le cas d'une rotule. Cela est lié au fait que cet insert correspond, comme expliqué ci-dessus, à une bague « extérieure » de rotule ou de roulement, dont la fabrication inclut systématiquement un usinage pour amener la surface extérieure de cette bague à ses côtes définitives de cylindre, comme expliqué dans FR-A-2 796 110. Dans ces conditions, lorsque l'ensemble de joint est fortement sollicité, la liaison fixe entre le corps externe et l'insert a tendance à se rompre, par cisaillement de la matière plastique, la ruine de l'interface corps/insert étant facilitée par la géométrie extérieure cylindrique de l'insert, en particulier lorsque le joint est sollicité suivant l'axe central de cette géométrie cylindrique.

Le but de la présente invention est de proposer un ensemble de joint du type défini ci-dessus, qui offre une bonne tenue mécanique dans le sens où son interface corps/insert peut supporter sans rupture des contraintes mécaniques de fonctionnement intenses.

A cet effet, l'invention a pour objet un ensemble de joint mécanique, tel que défini à la revendication 1.

L'idée à la base de l'invention est de « remplacer » la géométrie cylindrique de la surface extérieure de l'insert par une géométrique sphérique. Cette disposition induit de nombreux avantages techniques. Ainsi, pour une largeur d'insert donnée, la surface de contact entre l'insert et le corps externe est plus grande, ce qui diminue la concentration des contraintes mécaniques au niveau de l'interface corps/insert. En d'autres termes, à niveau de résistance à la rupture constant et par rapport à un ensemble de joint relevant de l'art antérieur, l'épaisseur de l'insert et/ou celle du corps externe, conformes à l'invention, peuvent alors être diminuées.

En pratique, l'ensemble de joint selon l'invention constitue avantageusement un ensemble rotulant ou un ensemble roulant, l'organe interne d'articulation étant alors respectivement une noix de rotule ou une pluralité d'éléments roulants, tels que des billes, des rouleaux et des aiguilles, avec ou sans cage.

Une forme de réalisation spécifique est définie à la revendication 2, plus spécifiquement à la revendication 3. Ainsi, grâce à sa définition géométrique, la forme sphérique tronquée de la surface extérieure de l'insert renforce le maintient de l'insert suivant des directions transversales au(x) plan(s) de troncature de cette forme sphérique, en particulier suivant la direction de l'axe de symétrie de révolution de sa surface extérieure.

Comme définie à la revendication 4, dans le cas d'un ensemble rotulant, un autre avantage de l'invention est que, en cas de grippage de la noix de rotule dans l'insert, ce dernier sert de fusible, dans le sens où, après rupture de la liaison entre la surface extérieure de l'insert et le corps externe, par cisaillement de la matière plastique de ce corps, l'insert et la noix grippée dans cet insert constituent un sous-ensemble d'un seul tenant, à même de tourner à la façon d'une pseudo-rotule dans un logement creux délimité par l'interface rompue entre l'insert et le corps externe. Ainsi, l'ensemble rotulant conforme à l'invention peut alors fonctionner dans un mode dégradé, en assurant une liaison articulée dont les caractéristiques cinématiques résultent de la coopération entre la surface extérieure sphérique de l'insert et la paroi intérieure pseudo-sphérique du logement précité, ces caractéristiques cinématiques étant proches de celles résultant initialement de la coopération entre la surface extérieure sphérique de la noix et la surface intérieure complémentaire de l'insert.

Une disposition particulièrement avantageuse est définie à la revendication 6. Grâce à cette disposition, la liaison fixe entre l'insert et le corps externe est significativement renforcée : le matériau composite qui comble cette ou ces gorges crée une zone de résistance à la propagation de la ruine de l'interface corps/insert lorsque cette interface commence à être cisaillée. En effet, la présence de cette ou ces gorges fait que le profil de cette interface, dont la définition est liée à la forme sphérique tronquée de la surface extérieure de l'insert, n'est pas rigoureusement circulaire, mais présente des creux et des bosses, ce qui augmente la surface de contact entre l'insert et le corps externe.

Des caractéristiques additionnelles avantageuses de l'ensemble de joint conforme à l'invention, prises isolément ou selon toutes les combinaisons techniquement possibles, sont définies aux revendications dépendantes 7 à 11.

L'invention a également pour objet un procédé de fabrication d'un ensemble rotulant, tel que défini à la revendication 12.

Ce procédé permet de fabriquer un ensemble de joint mécanique tel que défini ci-dessus dans le cas où l'organe interne d'articulation appartenant à cet ensemble est une noix de rotule.

Le procédé conforme à l'invention met à profit le fait que l'on cherche à disposer d'une forme sphérique pour la surface extérieure de l'insert. En effet, à la fin de la troisième étape, la surface extérieure du manchon présente cette géométrie sphérique, du fait du déroulement de cette troisième étape. Par conséquent, contrairement à des procédés relevant de l'art antérieur dans lesquels la surface extérieure du manchon est usinée pour la conformer en un cylindre, comme proposé par exemple dans FR-A-2 796 110, la quatrième étape peut être mise en oeuvre directement à l'issue de la troisième étape, ce qui réduit à la fois le temps et le coût du procédé, tout en obtenant au final un ensemble rotulant dont l'interface entre le corps et l'insert peut, en service, supporter sans rupture des contraintes mécaniques importantes.

Une forme de mise en oeuvre spécifique de ce procédé est définie à la revendication 13.

Une disposition particulièrement avantageuse du procédé est définie à la revendication 14. Grâce à cette disposition, on obtient un ensemble rotulant dont la liaison fixe entre l'insert et le corps externe est renforcée, comme expliqué plus haut. En pratique, la réalisation, notamment l'usinage, de la ou des gorges est une opération facile à mettre en oeuvre, dans le sens où les côtes des gorges à obtenir admettent des tolérances larges, en particulier bien plus larges que celles tolérées pour un aménagement de surface qui serait, par exemple, utilisé pour assembler mécaniquement l'insert, puisque, lors de la quatrième étape du procédé, le moulage du corps externe fait que le matériau composite comble naturellement cette ou ces gorges.

L'invention sera mieux comprise à la lecture de la description qui va suivre, donnée uniquement à titre d'exemple et fait en se référant aux dessins sur lesquels :
- la figure 1 est une vue en perspective, avec arraché, d'un ensemble rotulant conforme à l'invention ;
- la figure 2 est une demi-coupe transversale de l'ensemble rotulant de la figure 1 ;
- la figure 3 est une vue schématique en élévation, selon la flèche III indiquée à la figure 2, d'un constituant, considéré seul, de l'ensemble rotulant de la figure 1, le plan de coupe de la figure 2 étant indiqué par une ligne II-II à la figure 3 ; et
- les figures 4A à 4D sont des vues schématiques en perspective, avec un arraché partiel pour les figures 4A et 4B, les figures 4A à 4D illustrant respectivement des étapes successives de fabrication de l'ensemble rotulant de la figure 1.

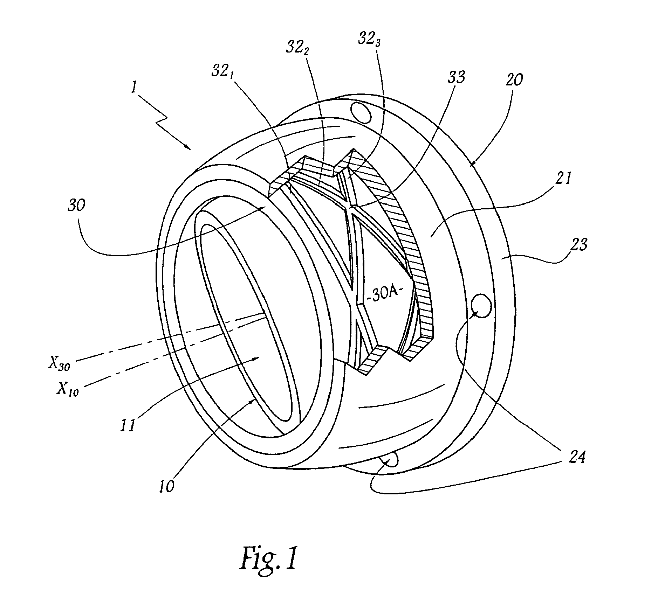

Sur les figures 1 à 3 est représenté un ensemble rotulant 1 comprenant essentiellement une noix interne 10 et un corps externe 20, avec interposition entre eux d'un insert 30.

La noix 10 est une pièce creuse définissant un axe de symétrie de révolution X₁₀. La surface extérieure 10A de la noix est sphérique, de manière centrée sur un point O appartenant à l'axe X₁₀ et tronquée par deux plans imaginaires perpendiculaires à cet axe, situés de part et d'autre du point O.

La surface intérieure 10B de la noix 10 est cylindrique d'axe X₁₀. Cette surface 10B délimite ainsi un logement 11 dans lequel peut être reçue et assemblée une pièce non représentée, telle qu'une bielle, présentant une surface extérieure cylindrique sensiblement complémentaire de la surface 10B.

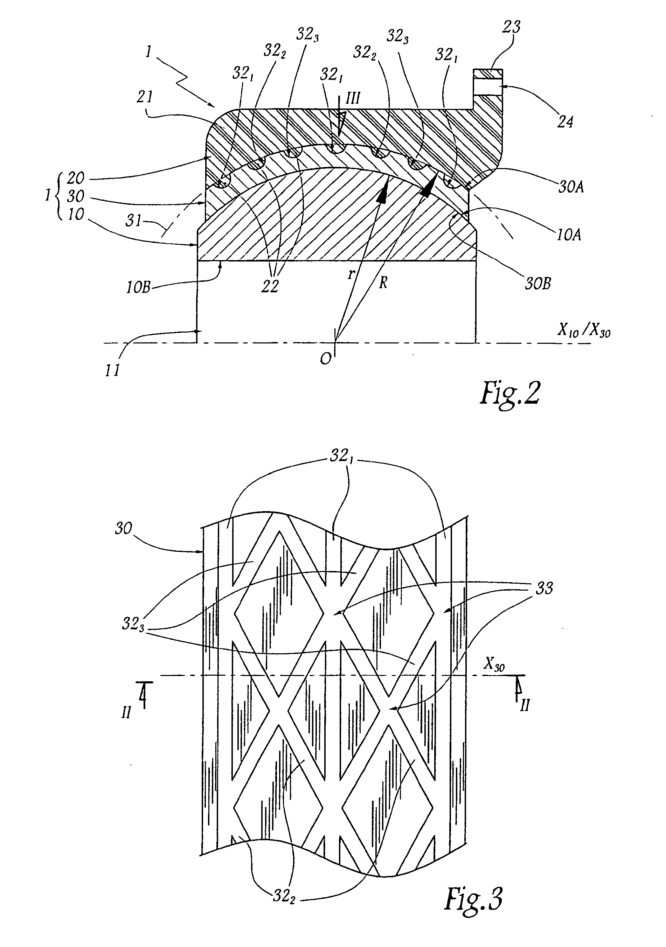

L'insert 30 est également une pièce creuse, qui définit un axe de symétrie de révolution X₃₀. La surface intérieure 30B de l'insert 30 est complémentaire de la surface 10A, c'est-à-dire que cette surface 30B est sphérique, centrée en O et présentant un rayon r sensiblement égal à celui de la surface 10A. La surface 30B est tronquée par deux plans imaginaires perpendiculaires à l'axe X₃₀, situés de part et d'autre du point O. Grâce à leur complémentarité de formes, les surfaces 10A et 30B sont au contact l'une de l'autre de manière articulée, de sorte que la noix 10 et l'insert 30 possèdent, l'un par rapport à l'autre, trois degrés de liberté en rotation autour de O. A ce propos, on peut noter que la noix 10 est représentée dans deux positions articulées différentes par rapport à l'insert 30 sur les figures 1 et 2, les axes X₁₀ et X₃₀ étant confondus sur la figure 2 tandis que, sur la figure 1, ces axes sont inclinés l'un par rapport à l'autre, de manière sécante en O.

Pour que les surfaces 10A et 30B s'articulent l'une sur l'autre de manière précise et pérenne, la noix 10 et l'insert 30 sont réalisés en métal.

La surface extérieure 30A de l'insert 30 est sphérique, de manière centrée sur O et tronquée par les deux mêmes plans de troncature que la surface 30B. Le rayon de la surface 30A est noté R, l'épaisseur de l'insert correspondant à la différence entre le rayon R et le rayon r.

La surface 30A est pourvue de gorges périphériques, formant des creux dans l'épaisseur de l'insert depuis l'enveloppe géométrique sphérique 31 définie par la surface 30A, comme bien visible à la figure 2 sur laquelle les prolongements de l'enveloppe 31 de part et d'autres des extrémités tronquées de la surface 30A sont représentés en pointillés.

Parmi les gorges précitées, on distingue trois types de gorge présentant des géométries respectives différentes. Ainsi, la surface 30A est pourvue de trois gorges 32₁ qui s'étendent en longueur suivant des directions respectives appartenant chacune à un plan perpendiculaire à l'axe X₃₀. Autrement dit, chacune de ces gorges 32₁ s'étend en longueur tout autour de l'axe X₃₀, suivant un direction orthoradiale à cet axe.

La surface 30A est également pourvue de gorges 32₂ et 32₃ qui s'étendent en longueur suivant des directions respectives globalement hélicoïdales, centrées sur l'axe X₃₀. Les gorges 32₂ correspondent à des portions d'hélice, reliant les extrémités tronquées de la surface 30A dans un sens, tandis que les gorges 32₃ correspondent à des portions d'hélice, reliant ces extrémités tronquées dans le sens opposé. Autrement dit, vues en élévation extérieure suivant une direction perpendiculaire à l'axe X₃₀, c'est-à-dire vues comme à la figure 3, les gorges 32₂ sont parallèles les unes aux autres, en s'étendant chacune en longueur suivant une direction inclinée par rapport à l'axe X₃₀, tandis que les gorges 32₃ sont parallèles les unes aux autres et s'étendent chacune en longueur suivant une direction inclinée par rapport à cet axe, avec une inclinaison opposée à celle associée aux gorges 32₂.

Avantageusement, les gorges 32₁, 32₂ et 32₃ sont agencées à la surface 30A de manière à s'entrecroiser en plusieurs zones de croisement 33, comme bien visible à la figure 3.

Le corps 20 est réalisé en un matériau composite incluant une matrice en matière plastique thermodurcissable ou thermoplastique, telle qu'une résine époxyde, polyamide ou phénolique. Cette matrice est renforcée par des fibres, par exemple des fibres de carbone.

Le corps 20 est agencé autour de l'insert 30 de sorte que son matériau composite recouvre la surface 30A, en comblant les gorges 32₁, 32₂ et 32₃, comme bien visible à la figure 2. La liaison entre le corps 20 et l'insert 30 est fixe dans le sens où la matière plastique du matériau composite adhère fermement à la surface 30A. Ainsi, le corps 20 comporte une partie principale massive 21 qui entoure extérieurement l'insert 30 de manière ajustée à sa surface 30A et d'où émergent en direction de l'insert des bourrelets saillants 22 reçus de manière ajustée dans les gorges 32₁, 32₂ et 32₃.

Dans l'exemple de réalisation considéré aux figures, le corps 20 est destiné à être fixé à une structure porteuse non représentée et comporte à cet effet une bride périphérique 23 qui s'étend en saillie vers l'extérieur de la partie principale 21, au niveau d'une extrémité, suivant l'axe X₃₀, de cette partie 21. La bride 23 est pourvue d'orifices 24 régulièrement répartis autour de l'axe X₃₀, afin de recevoir des vis, non représentées, d'assemblage à la structure précitée.

En service, la noix 10 s'articule dans l'insert 30 dont la position est fixe par rapport à la structure précitée, ce qui induit des contraintes dans cet insert, dans le corps 20 et dans l'interface entre l'insert et le corps. Comme la surface 30A est sphérique, les contraintes subies par l'interface corps/insert se répartissent sur une plus grande étendue que si la surface 30A était cylindrique. En outre, en raison du recouvrement sphérique de la surface 30A par le matériau composite du corps 20, ce dernier maintient mécaniquement l'insert suivant l'axe X₃₀, ainsi que suivant des directions légèrement inclinées par rapport à cet axe. La présence des gorges 32₁, 32₂ et 32₃ renforce la liaison fixe entre le corps et l'insert : la surface de contact entre le matériau composite et l'insert est en effet augmentée par rapport à l'enveloppe géométrique 31, augmentant d'autant l'effet d'adhésion entre ces composants, et, lorsque l'interface corps/insert tend à se rompre, les bourrelets de matériau composite 22 créent des reliefs de résistance à la propagation de la ruine de cette interface. En particulier, les gorges 32₁ renforcent la liaison entre le corps et l'insert suivant la direction de l'axe X₃₀, ce qui induit un bon maintien axial entre ces composants. Les gorges 32₂ et 32₃ participent, quant à elles, à renforcer le maintien en rotulage entre le corps et l'insert.

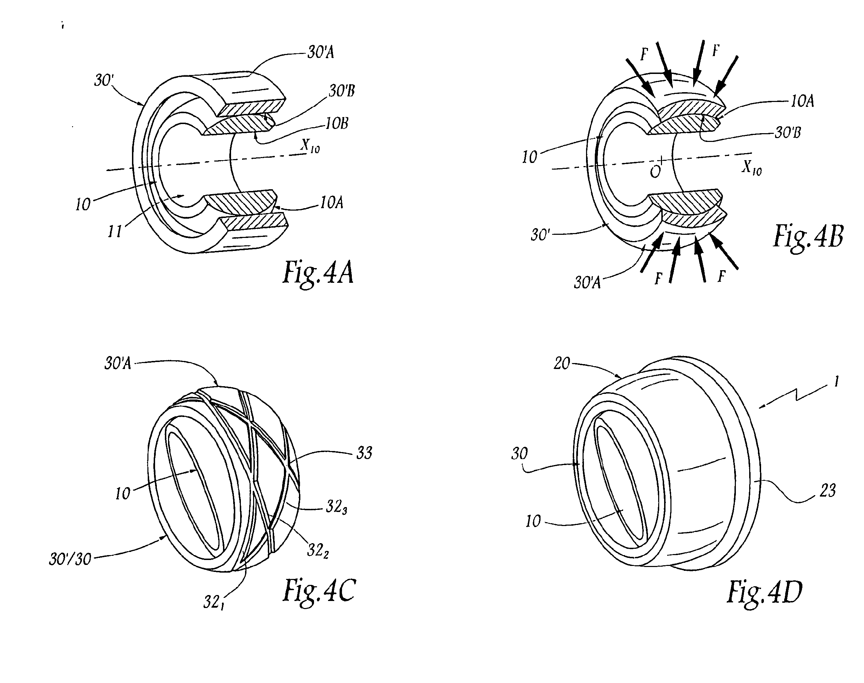

Un procédé de fabrication permettant d'obtenir l'ensemble rotulant 1 va maintenant être décrit en regard des figures 4A à 4D.

Dans une première étape de ce procédé, on dispose de la noix 10, conformée avec sa surface extérieure 10A sphérique et sa surface intérieure 10B cylindrique. Cette noix est obtenue par tout procédé adéquat, notamment par moulage et usinage d'une matière métallique.

Dans une deuxième étape du procédé, on engage la noix 10 à l'intérieur d'un manchon tubulaire 30', comme représenté sur la figure 4A. Le diamètre intérieur de ce manchon est choisi, à un jeu près, égal au diamètre r de la surface 10A, de sorte que le manchon 30' est engagé autour de la noix 10 de manière centrée sur l'axe X₁₀.

Dans une troisième étape, on exerce sur la face extérieure 30'A du manchon 30' un effort d'emboutissage ou de formage, comme indiqué par les flèches F sur la figure 4B. La paroi du manchon 30' est alors déformée pour appliquer toute la surface intérieure 30'B du manchon contre la surface extérieure 10A de la noix 10, jusqu'à rendre la surface 30'B complémentaire de la surface 10A, comme illustré à la figure 4B. En pratique, la déformation de la paroi du manchon par rapport à la noix est rendue possible grâce au choix d'un métal plus mou pour le manchon que pour la noix et/ou grâce à un dimensionnement adéquat de l'épaisseur des parois du manchon et de la noix.

Comme le manchon 30' est déformé sans que l'épaisseur de sa paroi ne soit substantiellement modifiée, sa surface extérieure 30'A passe de sa géométrie cylindrique initiale à une géométrie sphérique, de rayon R et centrée sur le même centre que les surfaces 30'B et 10A, c'est-à-dire en O. Ainsi, à l'issue de la troisième étape du procédé, l'enveloppe sphérique définie par la surface 30'A forme l'enveloppe 31. Autrement dit, si besoin après avoir creusé, notamment par usinage, les gorges 32₁, 32₂ et 32₃ dans la surface 30'A comme représenté sur la figure 4C, le manchon 30' forme l'insert 30, à d'éventuelles opérations de finissage près, relatives en particulier aux extrémités longitudinales du manchon. Ainsi, à la fin de la troisième étape du procédé, aucune opération de resurfaçage total de la surface extérieure du manchon n'est nécessaire avant de passer à l'étape suivante.

Dans une quatrième étape, le corps 20, y compris sa bride 23, est moulé autour du manchon 30' formant l'insert 30. Le matériau composite composant ce corps est alors moulé de manière à recouvrir la surface 30'A, notamment en comblant les gorges 32₁, 32₂ et 32₃. A l'issue de cette quatrième étape, le matériau composite adhère fermement à l'insert. On obtient ainsi l'ensemble rotulant 1, comme représenté sur la figure 4D. D'éventuelles opérations de finissage sont ensuite effectuées, telles que le percement des trous 24 dans la bride 23.

Divers aménagements et variantes à l'ensemble rotulant 1 et à son procédé de fabrication sont par ailleurs envisageables. A titre d'exemples :
- la géométrie des gorges 32₁, 32₂ et 32₃ décrite ci-dessus n'est qu'illustrative, dans le sens où d'autres tracés sont envisageables pour ces gorges, visant, entre autres, à augmenter ou à diminuer le nombre de zones de croisement 33 ; par ailleurs, à titre de variante non représentée, la surface extérieure 30A peut être pourvue, en remplacement ou en complément de tout ou partie des gorges envisagées jusqu'ici, d'au moins une gorge qui s'étend en longueur suivant une direction parallèle à l'axe X₃₀, ce qui renforce alors significativement le maintien de l'insert 30 en rotation autour de cet axe par rapport au corps externe 20 ;
- la géométrie extérieure du corps externe 20 peut prendre des formes diverses, selon la finalité technique de ce corps ; ainsi, à titre de variante non représentée, sa partie principale massive 21 peut être dépourvue de la bride 23, de manière que cette partie principale forme, en tant que telle, une collerette d'assemblage à une structure associée ; une autre variante non représentée consiste à prévoir que cette partie 21 constitue l'extrémité longitudinale d'un tube en matériau composite, ce tube servant de support à d'autres organes mécaniques que la noix 10 ; et/ou
- la noix de rotule 10 peut être remplacée par un autre organe interne d'articulation avec l'insert 30, en vue de former, avec cet insert et le corps externe en matériau composite 20, un ensemble de joint mécanique ; en particulier, cette noix peut être remplacée par des éléments roulants, tels que des billes, des rouleaux ou des aiguilles, avec ou sans cage, l'ensemble de joint obtenu faisant alors office d'ensemble de roulement.

## Revendications

1. Ensemble de joint mécanique, notamment ensemble rotulant (1), comportant un corps externe (20) en un matériau composite à matrice en matière plastique, dans lequel est agencé un organe interne d'articulation, tel qu'une noix de rotule (10), avec interposition d'un insert creux rigide (30) métallique qui délimite, d'une part, une surface intérieure (30B) coopérant par contact articulé avec l'organe interne, et, d'autre part, une surface extérieure (30A) liée fixement au corps externe en étant recouverte par ce corps pour former une interface de transmission de contraintes entre cet insert et ce corps externe,
**caractérisé en ce que** la surface extérieure (30A) de l'insert (30) est sensiblement sphérique tronquée.

2. Ensemble suivant la revendication 1, **caractérisé en ce que** la surface extérieure sphérique (30A) de l'insert (30) définit un axe de symétrie de révolution (X₃₀) qui passe par son centre (O), cette surface extérieure sphérique étant recouverte par le corps externe (20) de part et d'autre de son centre (O) suivant cet axe de symétrie de révolution.

3. Ensemble suivant la revendication 2, **caractérisé en ce que** la surface extérieure sphérique (30A) de l'insert (30) est tronquée par deux plans imaginaires, perpendiculaires à son axe de symétrie de révolution (X₃₀) et situés de part et d'autre de son centre (O).

4. Ensemble suivant l'une quelconque des revendications précédentes, **caractérisé en ce que**, dans le cas où l'organe interne d'articulation est une noix de rotule (10) et lorsque cette noix de rotule se grippe dans l'insert (30), l'interface entre l'insert et le corps externe (20) est apte à se rompre, par cisaillement de la matière plastique du corps externe, et à délimiter alors un logement creux sensiblement sphérique, dans lequel le sous-ensemble d'un seul tenant, constitué de l'insert et de la noix grippée dans cet insert, est à même tourner globalement à la façon d'une rotule.

5. Ensemble suivant l'une quelconque des revendications 1 à 3, **caractérisé en ce que** l'organe interne d'articulation consiste en des éléments roulants, tels que des billes, des rouleaux ou des aiguilles.

6. Ensemble suivant l'une quelconque des revendications précédentes, **caractérisé en ce que** la surface extérieure (30A) de l'insert (30) est pourvue d'au moins une gorge (32₁, 32₂, 32₃) comblée par une partie correspondante (22) du corps externe (20).

7. Ensemble suivant la revendication 6, **caractérisé en ce que** la surface extérieure (30A) de l'insert (30) est pourvue de plusieurs gorges (32₁, 32₂, 32₃) qui s'entrecroisent.

8. Ensemble suivant l'une des revendications 6 ou 7, **caractérisé en ce que** la ou chaque gorge (32₁, 32₂, 32₃) s'étend en longueur suivant une direction périphérique de la surface extérieure (30A) de l'insert (30).

9. Ensemble suivant l'une quelconque des revendications 6 à 8, **caractérisé en ce que** la ou au moins une des gorges (32₁) s'étend en longueur dans un plan sensiblement perpendiculaire à un axe de symétrie de révolution (X₃₀) défini par la surface extérieure (30A) de l'insert (30).

10. Ensemble suivant l'une quelconque des revendications 6 à 9, **caractérisé en ce que** la ou au moins une des gorges (32₂, 32₃) s'étend en longueur selon une direction hélicoïdale centrée sur un axe de symétrie de révolution (X₃₀) défini par la surface extérieure (30A) de l'insert (30).

11. Ensemble suivant l'une quelconque des revendications 6 à 10, **caractérisé en ce que** la ou au moins une des gorges s'étend en longueur selon une direction sensiblement parallèle à un axe de symétrie de révolution (X₃₀) défini par la surface extérieure (30A) de l'insert (30).

12. Procédé de fabrication d'un ensemble rotulant (1), qui comporte successivement :
- une première étape dans laquelle on dispose d'une noix de rotule (10), qui délimite une surface extérieure (10A) sphérique tronquée ;
- une deuxième étape dans laquelle on engage autour de la noix (10) un manchon tubulaire métallique (30') ;
- une troisième étape dans laquelle on exerce un effort d'emboutissage ou de formage (F) sur la surface extérieure (30'A) du manchon (30') pour appliquer toute la surface intérieure (30'B) du manchon contre la surface extérieure (10A) de la noix (10), jusqu'à la rendre complémentaire de la surface extérieure de la noix, la surface extérieure du manchon étant alors sensiblement sphérique tronquée ; et
- une quatrième étape dans laquelle on rapporte, notamment par moulage, autour du manchon (30') un corps externe (20) en un matériau composite à matrice en matière plastique, de manière que le manchon constitue un insert (30) dont la surface extérieure (30A) est liée fixement au corps externe en étant recouverte par ce corps pour former une interface de transmission de contraintes entre cet insert et ce corps externe,
**caractérisé en ce que**, entre la fin de la troisième étape et le début de la quatrième étape, l'enveloppe sensiblement sphérique (31) définie par la surface extérieure (30'A) du manchon (30') est conservée.

13. Procédé suivant la revendication 12, **caractérisé en ce que**, à la première étape, la noix de rotule (10) dont on dispose définit un axe de symétrie de révolution (X₁₀), qui passe par le centre (O) de sa surface extérieure sphérique (10A) et qui s'étend perpendiculairement à deux plans imaginaires de troncature de cette surface, situés de part et d'autre du centre, et **en ce que**, lors de la troisième étape, on exerce l'effort d'emboutissage ou de formage (F) sur la manchon (30) de part et d'autre de ce centre (O).

14. Procédé suivant l'une des revendications 12 ou 13, **caractérisé en ce que**, à la fin de la troisième étape, on creuse, notamment par usinage, au moins une gorge (32₁, 32₂, 32₃) dans la surface extérieure (30'A) du manchon (30'), cette ou ces gorges étant comblées par le matériau composite du corps externe (20) lors de la quatrième étape.

## Claims

1. Mechanical joint assembly, particularly a ball joint assembly (1), comprising an external body (20) made of a plastic matrix composite material, in which there is housed a joint internal component such as a ball joint centrepiece (10), with the interposition of a metal rigid hollow insert (30) which, on the one hand, delimits an interior surface (30B) collaborating in articulated contact with the internal component and, on the other hand, delimits an exterior surface (30A) fixedly connected to the external body being covered by this body in order to form an interface via which stresses can be transmitted between this insert and this external body,
**characterized in that** the exterior surface (30A) of the insert (30) is substantially in the shape of a truncated sphere.

2. Assembly according to Claim 1, **characterized in that** the spherical exterior surface (30A) of the insert (30) defines an axis of symmetry of revolution (X₃₀) which passes through its centre (O), this spherical exterior surface being covered by the external body (20) on each side of its centre (O) along this axis of symmetry of revolution.

3. Assembly according to Claim 2, **characterized in that** the spherical exterior surface (30A) of the insert (30) is truncated by two imaginary planes perpendicular to its axis of symmetry of revolution (X₃₀) and situated one on each side of its centre (O).

4. Assembly according to any one of the preceding claims, **characterized in that**, if the joint internal component is a ball joint centrepiece (10) and when this ball joint centrepiece becomes seized in the insert (30), the interface between the insert and the external body (20) is capable of yielding, through the shearing of the plastic of the external body, and then delimiting a substantially spherical hollow housing in which the one-piece subassembly consisting of the insert and of the centrepiece seized in this insert, is able to turn more or less in the manner of a ball joint.

5. Assembly according to any one of Claims 1 to 3, **characterized in that** the joint internal component consists of rolling elements such as balls, rollers or needles.

6. Assembly according to any one of the preceding claims, **characterized in that** the exterior surface (30A) of the insert (30) is provided with at least one groove (32₁, 32₂, 32₃) filled by a corresponding part (22) of the external body (20).

7. Assembly according to Claim 6, **characterized in that** the exterior surface (30A) of the insert (30) is provided with a number of grooves (32₁, 32₂, 32₃) which intersect with one another.

8. Assembly according to one of Claims 6 and 7, **characterized in that** the or each groove (32₁, 32₂, 32₃) extends lengthways in a peripheral direction of the exterior surface (30A) of the insert (30).

9. Assembly according to any one of Claims 6 to 8, **characterized in that** the or at least one of the grooves (32₁) extends lengthwise in a plane substantially perpendicular to an axis of symmetry of revolution (X₃₀) defined by the exterior surface (30A) of the insert (30).

10. Assembly according to any one of Claims 6 to 9, **characterized in that** the or at least one of the grooves (32₂, 32₃) extends lengthwise in a helical direction centred on an axis of symmetry of revolution (X₃₀) defined by the exterior surface (30A) of the insert (30).

11. Assembly according to any one of Claims 6 to 10, **characterized in that** the or at least one of the grooves extends lengthwise in a direction substantially parallel to an axis of symmetry of revolution (X₃₀) defined by the exterior surface (30A) of the insert (30).

12. Method of manufacturing a ball joint assembly (1), which comprises, in succession:
- a first step in which a ball joint centrepiece (10) which delimits an exterior surface (10A) in the form of a truncated sphere is obtained;
- a second step in which a metal tubular sleeve (30') is fitted around the centrepiece (10);
- a third step in which a pressing or forming force (F) is applied to the exterior surface (30'A) of the sleeve (30') in order to apply the entire interior surface (30'B) of the sleeve against the exterior surface (10A) of the centrepiece (10) until it is made to complement the exterior surface of the centrepiece, the exterior surface of the sleeve then being substantially in the form of a truncated sphere; and
- a fourth step in which moulding in particular is used to add an external body (20) made of a plastic matrix composite material around the sleeve (30') in such a way that the sleeve constitutes an insert (30), the exterior surface (30A) of which is fixedly attached to the external body, being covered by this body, to form an interface via which stresses can be transmitted between this insert and this external body,
**characterized in that**, between the end of the third step and the start of the fourth step, the substantially spherical envelope (31) defined by the exterior surface (30'A) of the sleeve (30') is maintained.

13. Method according to Claim 12, **characterized in that**, at the end of the first step, the ball joint centrepiece (10) obtained defines an axis of symmetry of revolution (X₁₀) which passes through the centre (0) of the spherical exterior surface (10A) and which extends at right angles to two imaginary planes of truncation of this surface, these two planes being situated one on each side of the centre, and **in that**, during the third step, the pressing or forming force (F) is applied to the sleeve (30) on each side of this centre (O).

14. Method according to one of Claims 12 and 13, **characterized in that**, at the end of the third step, at least one groove (32₁, 32₂, 32₃) is created, particularly by machining, in the exterior surface (30'A) of the sleeve (30'), this or these grooves being filled with the composite material of the external body (20) during the fourth step.

## Patentansprüche

1. Mechanische Gelenkeinheit, insbesondere verdrehbare Einheit (1), enthaltend einen äußeren Körber (20) aus einem Kompositmaterial mit Kunststoffmatrix, in dem ein inneres Gelenkorgan, wie zum Beispiel eine Kugelgelenknuss (10), angeordnet ist mit einem dazwischen eingefügten metallischen ausgehöhlten starren Einsatz (30), der begrenzt Ist durch eine innere Oberfläche (30B), die durch einen gelenkigen Kontakt mit dem inneren Gelenkorgan zusammenwirkt, einerseits und durch eine äußere Oberfläche (30A), die fest mit dem äußeren Körper verbunden ist, wobei sie durch diesen Körper bedeckt ist, andererseits, um eine Grenzfläche zum Übertragen von Belastungen zwischen diesem Einsatz und diesem äußeren Körper zu bilden, **dadurch gekennzeichnet, dass** die äußere Oberfläche (30A) des Einsatzes (30) etwa abgeschnitten sphärisch Ist.

2. Einheit nach Anspruch 1, **dadurch gekennzeichnet, dass** die sphärische äußere Oberfläche (30A) des Einsatzes (30) eine Rotationssymmetrieachse (X₃₀) definiert, die durch ihre Mitte (0) läuft, wobei diese sphärische äußere Oberfläche dieser Rotationssymmetrieachse zufolge bei-derseits ihrer Mitte (O) durch den äußeren Körper (20) bedeckt ist.

3. Einheit nach Anspruch 2, dass die sphärische äußere Oberfläche (30A) des Einsatzes (30) durch zwei zu ihrer Rotationssymmetrieachse (X₃₀) senkrechte imaginäre Ebenen beiderseits ihrer Mitte (O) abgeschnitten ist.

4. Einheit nach einem der vorhergehenden Ansprüche, **dadurch gekennzeichnet, dass** in dem Fall, in dem das innere Gelenkorgan eine Kugelgelenknuss (10) ist und wenn diese Kugelgelenknuss sich in dem Einsatz (30) verklemmt, die Grenzfläche zwischen dem Einsatz und dem äußeren Körper (20) geeignet ist, durch eine Scherbeanspruchung des Kunststoffs des äußeren Körpers zu brechen und dann ein etwa sphärisch ausgehöhltes Lagerbett zu begrenzen, in dem die aus dem Einsatz und der in diesem Einsatz verklemmten Nuss gebildete Untereinheit in einem Stück in der Lage ist, sich in ihrer Gesamtheit nach Art eines Kugelgelenks zu drehen.

5. Einheit nach einem der Ansprüche 1 bis 3, **dadurch gekennzeichnet, dass** das innere Gelenkorgan gebildet ist aus rollenden Elementen besteht, wie zum Beispiel Kugeln, aus Walzen oder aus Nadeln.

6. Einheit nach einem der vorhergehenden Ansprüche, **dadurch gekennzeichnet, dass** die äußere Oberfläche (30A) des Einsatzes (30) mit mindestens einer Rille (32₁, 32₂, 32₃) versehen ist, die von einem entsprechenden Teil (22) des äußeren Körpers (20) ausgefüllt ist.

7. Einheit nach Anspruch 6, **dadurch gekennzeichnet, dass** die äußere Oberfläche (30A) des Einsatzes (30) mit mehreren Rillen (32₁, 32₂, 32₃) versehen ist, die sich kreuzen.

8. Einheit nach einem der Ansprüche 6 oder 7, **dadurch gekennzeichnet, dass** die oder jeder Rille (32₁, 32₂, 32₃) sich in Längsrichtung längs einer Umfangsrichtung der äußeren Oberfläche (30A) des Einsatzes (30) erstreckt.

9. Einheit nach einem der Ansprüche 6 bis 8, **dadurch gekennzeichnet, dass** die oder wenigstens eine der Rillen (32₁) sich In Längsrichtung in einer zu einer durch die äußere Oberfläche (30A) des Einsatzes (30) definierten Rotationssymmetrieachse (X₃₀) etwa senkrechten Ebene erstreckt.

10. Einheit nach einem der Ansprüche 6 bis 9, **dadurch gekennzeichnet, dass** die oder wenigstens eine der Rillen (32₂, 32₃) sich in Längsrichtung in einer schraubenförmigen Richtung erstreckt, die zentriert ist auf eine durch die äußere Oberfläche (30A) des Einsatzes (30) definierte Rotationssymmetrieachse (X₃₀).

11. Einheit nach einem der Ansprüche 6 bis 10, **dadurch gekennzeichnet,**
**dass** die oder wenigstens eine der Rillen sich in Längsrichtung nach einer zu einer durch die äußere Oberfläche (30A) des Einsatzes (30) definierten Rotationssymmetrieachse (X₃₀) etwa parallelen Richtung erstreckt.

12. Verfahren zum Herstellen eine verdrehbaren Einheit (1), das aufeinander folgend beinhaltet:
- eine erste Phase, in der man eine Kugelgelenknuss (10) an ordnet, die durch eine abgeschnitten sphärische äußere Oberfläche (10A) begrenzt ist;
- eine zweite Phase, in der man eine metallische röhrenförmige Muffe (30') um die Nuss (10) herum anordnet;
- eine dritte Phase, in der man auf die äußere Oberfläche (30'A) der Muffe (30') eine Tiefzieh- oder Verformungskraft (F) ausübt, um die ganze innere Oberfläche (30'B) der Muffe gegen die äußere Oberfläche (10A) der Nuss (10) anzulegen, bis sie komplementär zur äußeren Oberfläche der Nuss gemacht ist, wobei die äußere Oberfläche der Muffe dann etwa abgeschnitten sphärisch ist; und
- eine vierte Phase, in der man, insbesondere durch Gießen, um die Muffe (30') einen äußeres Körper (20) aus einem Kompositmaterial mit Kunststoffmatrix anstückt, derart dass die Muffe einen Einsatz (30) bildet, dessen äußere Oberfläche (30A) fest mit dem äußeren Körper verbunden ist, wobei sie durch dieses Körpers bedeckt ist, um eine Grenzfläche zum Übertragen von Belastungen zwischen diesem Einsatz und diesem äußeren Körper zu bilden,
**dadurch gekennzeichnet, dass** zwischen dem Ende der dritten Phase und dem Beginn der vierten Phase die durch die äußere Oberfläche (30'A) der Muffe (30') definierte etwa sphärische Umhüllende (31) bewahrt wird.

13. Verfahren nach Anspruch 12, **dadurch gekennzeichnet, dass** die Kugelgelenknuss (10), die man bei der ersten Phase anordnet, eine Rotationssymmetrieachse (X₁₀) definiert, die durch eine Mitte (O) ihrer sphärischen äußeren Oberfläche (10A) läuft und die sich senkrecht zu zwei imaginären beiderseits der Mitte gelegenen Schnittebenen dieser Oberfläche erstreckt, und **dadurch**, dass man bei der dritten Phase die Tiefzieh- oder Verformungskraft (F) beiderseits dieser Mitte (O) auf die Muffe (30) ausübt.

14. Verfahren nach einem der Ansprüche 12 oder 13, **dadurch gekennzeichnet, dass** man am Ende der dritten Phase in der äußeren Oberfläche (30'A) der Muffe (30'), insbesondere durch maschinelle Bearbeitung, mindestens eine Rille (32₁, 32₂, 32₃) aushebt, wobei diese Rille oder Rillen bei der vierten Phase mit dem Kompositmaterial des äußeren Körpers (20) ausgefüllt wird oder werden.
